(19) **Europäisches Patentamt / European Patent Office / Office européen des brevets**

(11) **EP 1 433 104 B1**

(12) **EUROPEAN PATENT SPECIFICATION**

(45) Date of publication and mention
of the grant of the patent:
**28.03.2012 Bulletin 2012/13**

(51) Int Cl.:
***G06Q 10/00*** (2012.01)

(21) Application number: **02766375.6**

(86) International application number:
**PCT/US2002/030714**

(22) Date of filing: **27.09.2002**

(87) International publication number:
**WO 2003/029917 (10.04.2003 Gazette 2003/15)**

(54) **NON-DETERMINISTIC METHOD AND SYSTEM FOR THE OPTIMIZATION OF TARGETED CONTENT DELIVERY**

NICHTDETERMINISTISCHES VERFAHREN UND SYSTEM ZUM OPTIMIEREN DER GEZIELTEN INHALTSABLIEFERUNG

PROCEDE ET SYSTEME NON DETERMINISTES DESTINES A L'OPTIMISATION DE LA LIVRAISON DE CONTENU CIBLE

(84) Designated Contracting States:
**AT BE BG CH CY CZ DE DK EE ES FI FR GB GR IE IT LI LU MC NL PT SE SK TR**

(30) Priority: **03.10.2001 US 969911**

(43) Date of publication of application:
**30.06.2004 Bulletin 2004/27**

(73) Proprietor: **OpenTV, Inc.**
**San Francisco, CA 94111 (US)**

(72) Inventor: **THURSTON, Nathaniel**
**Cambridge, MA 02139-3302 (US)**

(74) Representative: **Wenger, Joel-Théophile**
**Leman Consulting S.A.**
**Chemin de Précossy 31**
**1260 Nyon (CH)**

(56) References cited:
| | |
|---|---|
| **US-A- 5 623 404** | **US-A- 5 623 404** |
| **US-A- 5 724 521** | **US-A- 5 724 521** |
| **US-A- 5 918 014** | **US-A- 5 926 800** |
| **US-A- 6 026 368** | **US-A- 6 026 368** |
| **US-A- 6 144 944** | **US-A- 6 144 944** |
| **US-B1- 6 286 012** | |

**Description**

**Field of the Invention**

The present invention relates to a system and method for scheduling the delivery of targeted content to network devices in an optimal fashion using a non-deterministic algorithm.

**Description of Related Art**

Advertising directed to iTV users (typically video and advertisements and banner advertisements) is expected to grow rapidly along with the growth of iTV, the Internet, and E-commerce activity. Traditional methods of advertising have been found to be generally ineffective in drawing responses from users. Traditionally, television advertisements and web advertisements have not been targeted to users but are targeted based on the audience associated with the television show or Internet content site on which the advertisement will be appearing. A more effective method of advertising is advertising targeted to particular users.

The ability to target advertising and content delivery directly to users creates the problem of how to optimally schedule the delivery of the advertising and content. The complexity of the problem arises from having multiple sources of targeted content competing for delivery to end users with non-uniform overlapping periods of eligibility. Most schedulers are focused on problems dealing with the scheduling of resources for the task of an operation. These schedulers typically generate schedules in advance and contain a schedule for the entire operation. Such plans are not flexible and are not optimally tuned on the fly for performance enhancement.

A need exists for a method and system for scheduling delivery of targeted content to network devices in an optimal manner that is flexible and can be finetuned on the fly.

US-6144944 discloses a system for selecting and providing information, capable of providing selected advertisements in response to a request from a webpage server. An advertisement server includes a control program for controlling the selection of the advertisements, based on an affinity (degree of relevance or indicator of matching) of respective advertisements in relation to the request.

US-5724521 discloses a method and apparatus for providing electronic advertisements to end users in a consumer best-fit pricing manner. An index database stores the titles of electronic advertisements, and a user profile database stores sets of characteristics corresponding to individual end users. A matching process employs data from both databases for selecting advertisements for transfer to the end users.

US-6026368 concerns an online interactive system for providing content and advertising information to a targeted set of viewers. The system includes a queue builder for generating queues of content segments for each identified viewer, a computer mediated communications network for sending content data and subscriber data to the queue builder, and an online queue manager for receiving the queues from the queue builder and for sending content segment playlists to the computer mediated communications network. The system assembles and provides content and advertising information for distribution.

**Brief Summary of the Invention**

According to the invention, there is provided a method of scheduling delivery of items of content to a plurality of network devices, the method comprising: determining a profile for at least a portion of each user of an associated one of the plurality of network devices, the profile being based on an observed use of the associated one of the plurality of network devices; and generating a unique individual list of one or more items of content to be delivered to each of the plurality of network devices, the unique individual list being based on the profile of the user of the associated one of the plurality of network devices and specifications, the specifications including delivery parameters for each of the items of content; and characterised by: determining a priority and a weight for each of the items of content, the priority being a value relating to an order of delivery and the weight being a factor in determining a probability of delivery for each item of content in relation to the other items of content at each network device; and optimizing a delivery schedule for the items of content based on the determined priority and weight for each of the items of content.

One embodiment of the invention is a method for scheduling delivery of items of content to a plurality of network devices. In this embodiment, the method features generating an individual list of one or more items of content to be delivered to each network device based on profiles of the network devices and specifications for the items of content, and determining a priority and a weight for each of the items of content, the priority and weight for each item of content determining the probability of delivery at each network device in relation to other items of content, wherein determining the priority and the weight for each of the items of content optimizes a delivery schedule for the items of content. The network devices can be iTV set-top boxes or computers with Internet access, and the items of content can be advertisements. Generally, for each individual network device, the item of content with the highest priority is delivered before other items of content and, if two or more items of content have the same highest priority, the weight for the items of content is used to determine the percentage of time each item of content will be delivered. The method of the invention can use a number of pieces of data, including the number of deliveries requested for each item of content and the number of impression available for each network device to set the weight and priority for each item of content.

The invention also provides a computer system to schedule delivery of items of content to a plurality of network devices, the system comprising: a memory for storing a program; and a processor operative with the program to: determine a profile for at least a portion of each user of an associated one of the plurality of network devices, the profile being based on an observed use of the associated one of the plurality of network devices; and generate a unique individual list of one or more items of content to be delivered to each of the plurality of network devices, the unique individual list being based on the profile of the user of the associated one of the plurality of network devices and specifications, the specifications including delivery parameters for each of the items of content; and characterised by the processor further being operative with the program to: determine a priority and a weight for each of the items of content, the priority being a value relating to an order of delivery and the weight being a factor in determining a probability of delivery for each item of content in relation to the other items of content at each network device; and optimizing a delivery schedule for the items of content based on the determined priority and weight for each of the items of content.

Another embodiment of the invention is a computer system for scheduling delivery of items of content to a plurality of network devices. In this embodiment, the computer system features a memory for storing a program and a processor operative with the program to: (1) generate an individual list of one or more items of content to be delivered to each network device based on profiles of the network devices and specifications for the item of content, and (2) determine a priority and a weight for each of the items of content, the priority and weight for each item of content determining the probability of delivery at each network device in relation to other items of content, wherein determining the priority and the weight for each of the items of content optimizes a delivery schedule for the items of content.

These and other features and advantages of the present invention will become readily apparent from the following detailed description wherein embodiments of the invention are shown and described by way of illustration of the best mode of the invention. As will be realized, the invention is capable of other and different embodiments and its several details may be capable of modifications in various respects, all without departing from the invention. Accordingly, the drawings and description are to be regarded as illustrative in nature and not in a restrictive or limiting sense with the scope of the application being indicated in the claims.

**Brief Description of the Drawings**

For a fuller understanding of the nature and objects of the present invention, reference should be made to the following detailed description taken in connection with the accompanying drawings wherein:

FIGURE 1 is a schematic diagram illustrating a representative network in which the inventive system is preferably implemented;
FIGURE 2 is a schematic diagram illustrating in greater detail the preferred architecture of the inventive system;
FIGURE 3 is a flow chart illustrating in general the process for scheduling content delivery in accordance with the invention; and
FIGURE 4 is a flow chart illustrating in general one process of the invention for adjusting priorities and weights for items of content.

**Detailed Description of Preferred Embodiments**

U.S. patent no. 7,174,305 entitled "Method and System for Scheduling Online Targeted Content Delivery" discloses a method and a system for scheduling targeted content delivery to network users that allocates inventor on demand as users come online. In addition, U.S. published patent application no. US 2002-0059094 entitled "Method and System for iTV User Profiling And Selective Content Delivery" disclose methods and systems for profiling online users and iTV users (who arc also referred to herein as clients or subscribers) based on their observed surfing or viewing habits and for selectively delivering content, e.g., advertising, to the users based on their individual profiles.

The present invention is directed to optimizing content delivery to network devices. Embodiments of the invention can be implemented in content delivery systems that delivery content based on the profiles of users of the network devices such as, e.g., those disclosed in the above-identified publications. Very briefly, in accordance with one embodiment of the invention, operations research and yield management techniques are utilized to forecast the availability of user screen real estate (i.e., inventory) and a non-deterministic mathematical algorithm is used to optimize the use of surplus real estate and generate on-demand selective content delivery schedules to transmit content to the users. The content is displayed on a user's television or computer monitor, and can compromise advertising, e.g., in the form of video commercial, banner advertisements, or pop-up advertisements.

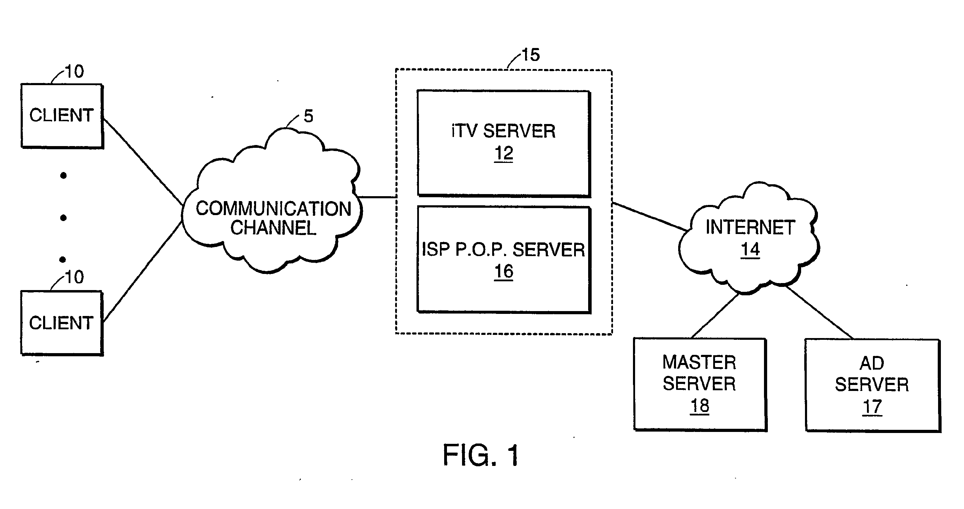

FIGURE 1 illustrates a representative network in which the inventive system can be implemented in one embodiment. The network includes one or more client machines 10 operated by various individual users. The client machine 10 connect to an iTV/ISP server 15 via a communication channel 5, which may be a broadcast that is relayed to the clients 10 via a cable connection satellite dish, or the like. The communication channel 5, in some embodiments, includes a back channel of communication for data going upstream from a client 10 to the iTV/ISP server 15. Such a back channel of communication, also represented by communication channel 5 in FIGURE 1, can be a telephone line or cable modem, and such a back channel of communication allows two-way communication between the clients 10 and the iTV/ISP server 15. In another embodiment, which is a one-way communication embodiment, the iTV/ISP server 15 broadcasts information to the clients 10, but the clients 10 have no way of accessing or providing information back to the iTV/ISP server 15.

The iTV/ISP server 15 can be an iTV server 12, an ISP server 16, or a combination of the iTV server 12 and the ISP server 16. The iTV server 12 provides iTV content that can include programs, advertisements, and interactive content including the Internet. Such an iTV server can be provided by a cable operator, such as RCN. FIGURE 1 also illustrates an ISP "point-of-presence" (POP), which includes an ISP POP Server 16, which can be linked to the client 10 for providing access to the Internet. The ISP server 16 can be operated by the same entity as the iTV server 12, by separate entities, or by a joint effort between entities. In addition, the iTV server 12 can also function as the ISP server 16. In any event, the combined iTV/ISP server 15 depicted in FIGURE 1 represents the possibility that these two servers can be linked in some manner so that the client 10 has access to interactive television programming and the Internet. It should be noted, however, that in some embodiments a client 10 might not have Internet access, and in such cases the iTV server 12 can be used without an ISP server 16. The Internet service provided through the ISP server 16 can be provided through a cable modem or over telephone lines.

In some embodiments, advertising is hosted by an ad server 17 that is separate from the iTV server 12 that hosts the programming content. In such an embodiment, the iTV server 12 is connected to the ad server 17 by a communication channel 14, which can be an Internet connection. The ad server 17, which can exist in typical iTV or television networks, allows advertisers to interact with the iTV server 12 to manage advertising over the television. In one embodiment of the invention, a master server 18 is used to remotely manage the ad server 17. The master server 18 is connected to the ad server 14 through communication channel 14, which can be an Internet connection. The master server 18 can be used by advertisers in an embodiment of the invention to determine which ads should be sent to which clients 10. In addition, in a television embodiment, the master server 18 communicates this information to the ad server 17 through the communication channel 14, and the information is then forwarded to the iTV server 12 and ultimately the client 10. In an Internet embodiment, the master server 18 communicates this advertising information to the ISP server 16, which then communicates this information to the client 10. The master server 18 can also generate content recommendations for clients 10 that are relayed to the iTV server 12 via the ad server 17.

The client machine 10 can be an interactive television set with a set top box or, in other embodiments, a computer. Generally, these client machines 10 can be any type of network device existing for a subscriber. The set top box can be made by Motorola and the operating system may be the OpenTV operating system, although set top boxes made by other entities and other operating systems can also be used. The television itself can be made by any manufacturer, including but not limited to Magnavox, Sony, and Toshiba. A representative interactive television set includes a set top box with a computer processing unit and memory, a remote control or keyboard, and a display unit (television set). The screen of the display unit is used to present programs, advertising, and other content to the user. A graphical user interface (GUI) on the display unit can also be available for the user to make programming selections, interact with programs, and access the Internet. The GUI is supported by the operating system and allows the user to use a point and click method of input, e.g., by moving a highlighted area on the display screen to a section representing a program at a particular time and pressing on the remote control buttons to perform a selection. Also, one or more "windows" can be opened up on the screen independently or concurrently as desired One predominant GUI is the interactive television guide that allows a user to select a program to watch through the use of a remote control unit. Client machines 10 usually access web servers through the connection provided by a cable company, such as RCN.

If the interactive television includes Internet access, the client machine 10 typically includes a browser, which is a known software tool used for accessing the Internet. Representative browsers include Netscape Navigator and Microsoft Internet Explorer, although other browsers can be used within the scope of the invention. In such an embodiment, the client 10 can communicate with the ISP server 16. As is well known, the World Wide Web is the Internet's multimedia information retrieval system. In particular, it is a collection of servers of the Internet that use the Hypertext Transfer Protocol (HTTP), which provides users access to files (which can be in different formats such as text, graphics, images, sound, video, etc.) using, e.g., a standard page description language known as Hypertext Markup Language (HTML). HTML provides basic document formatting and allows developers to specify links to other servers and files. These links include "hyperlinks," which are text phrases or graphic objects that conceal the address of a site on the Web.

A user of a client machine 10 having an HTML-compatible browser (e.g., Netscape Navigator) can retrieve a Web page (namely, an HTML formatted document) of a Web site by specifying a link via the URL (e.g., www.yahoo.com/photography). Upon such specification, the client machine makes a transmission control protocol/Internet protocol (TCP/IP) request to the server identified in the link and receives the Web page in return.

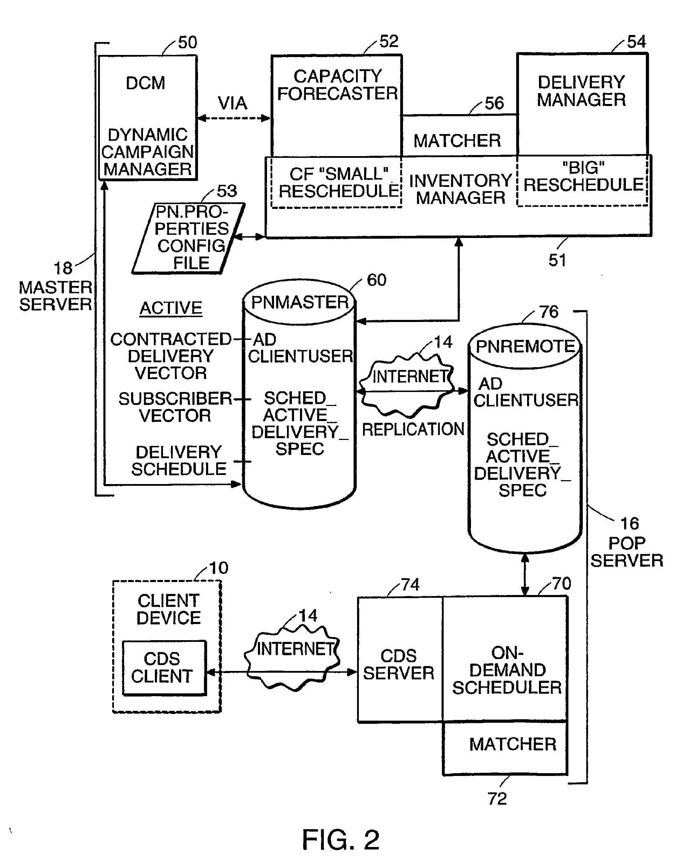

FIGURE 2 illustrates in greater detail one preferred scheduler system architecture. (For simplicity, only a single iTV server 16 and a single client 10 are shown.) As illustrated, the master server system 18 includes various software components for managing content delivery including a Dynamic Campaign Manager 50, a Capacity Forecaster 52, a Delivery Manager 54, an Inventory Manager 51, system configuration information 53, and a matcher 56. The master server system 18 also includes a master database 60 storing advertisements and user profiles. Also, On-Demand Scheduler 70, local matcher 72 and content delivery system (cds) server 74 components reside at the iTV server 16. The iTV server 16 also includes a remote local database 76 storing individual user profile data and advertisements. The Dynamic Campaign Manager component 50 provides a portal to the system for advertisers (or Ad buyers or media buyers who act on behalf of advertisers) to initiate and manage their advertising campaigns. (The terms Ad buyer, media buyer, and advertiser are used interchangeably for purposes of this application.) The advertiser can, e.g., monitor the number of times content has been delivered to a client 10 (i.e., the number of impressions) and the number of click-throughs (in the case of banner ads delivered over an interactive television system or via the Internet) on that content during the course of a campaign. In alternative implementations of the network that do not have a back-channel (i.e. the server can send messages to the client device, but the client device cannot send messages back to the server) the data on impressions and click-throughs will be estimated based on survey data (e.g. Nielsen Media Research) and zip code based census data (e.g. Claritas Prizm codes).

The Capacity Forecaster 52 reviews new campaigns proposed by advertisers and predicts whether their campaign objectives are achievable in view of forecasted inventory of user screen real estate. The Capacity Forecaster 52 thereby assists in forming contracts having an expected high degree of success. A 'contract' as used herein is generally an agreement for content delivery typically between the scheduler system operator or owner and an advertiser or media buyer. This agreement specifies various terms including, e.g., the content to be delivered, delivery quantity (i.e., number of impressions), target subscriber group, and start and end dates.

The Inventory Manager 51 generates a candidate plan to fulfill new and existing advertiser contracts and to optimize usage of surplus user screen real estate. The Inventory Manager 51 modifies the plan as needed based on delivery feedback Information received from the On-Demand Scheduler 70. In alternate implementations of the present invention for networks that do not have a back channel between the CDS Client and the CDS Server, there is no direct feedback that can be used to update the schedule. For such an implementation, the On-Demand Scheduler and Inventory Manager would have to use outside sources (such as Nielsen Media Research and Claritas Prizm Codes) to estimate how many users of each demographic group actually viewed the ads.

The Delivery Manager 54 generates the best plan for the current day's scheduled deliveries. The Delivery Manger 54 is also responsible for balancing deliveries within a day and processing the results of the On-Demand Scheduler. The On-Demand Scheduler 70 dynamically constructs delivery schedules for individual users as they become active on the system (i.e. when they login or turn on the television). This dynamic process, which seeks to optimize delivery of advertisements, is described in more detail below in the section on the On-Demand Scheduler and Delivery Parameter Optimizer (DPO). The Capacity Forecaster 52 and Delivery Manager 54 are also described in greater detail below.

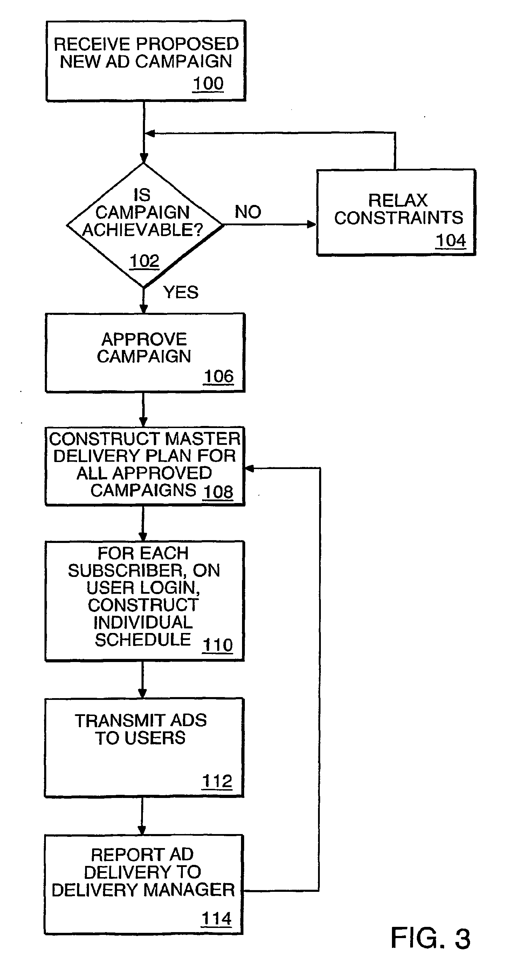

FIGURE 3 is a flowchart generally illustrating the process of scheduling and delivering content in accordance with the invention. At Step 100, the Dynamic Campaign Manager 50 receives a proposed new advertising campaign from an advertiser. At Step 102, the Capacity Forecaster reviews the proposed campaign to determine whether the campaign goals are achievable. If the inventory projections are less then the campaign goals, then at Step 104, the scheduler system identifies and suggests which constraints could be relaxed in order to achieve campaign goals as will be described below. If the campaign is determined to be achievable, it is approved at Step 106.

The Inventory Manager 51 then constructs a delivery plan for all approved campaigns at Step 108. At Step 110, for each subscriber, the On-Demand scheduler 70 constructs an individual delivery schedule, and ads are matched with individual subscribers based on the profiles of the subscribers, which can be generated in any manner, including sampling or demographic analysis. At Step 112 advertisements are transmitted to users based on their individual delivery schedules. The system reports advertisement delivery feedback to the Delivery Manager at Step 114, which is used to update the master delivery plan as will be discussed below. Finally, it should be noted that the embodiments of the invention described herein can be used to deliver not only advertisements ("ads"), but also other items of content as well, such as program content.

On-Demand Scheduler

The On-Demand Scheduler 70, which resides at each iTV server 16 in the system, dynamically constructs an individual ordered list of advertisements to be delivered for each given user upon user login. If there is no back channel of communication at the client 10, the set-top box at the client 10 (in an iTV embodiment) performs this function. Each individual list includes advertisements matched to the user and prioritized according to the master list received from the Delivery Manager 54. The list of advertisements that the client 10 receives is therefore matched to the client's profile.

After the Delivery Manager 54 has produced a plan for a set of ads, the Content Delivery System (CDS) Server 74 loads this plan from the database and generates a matrix of ads which are compatible with subscribers that are eligible to view these ads. The CDS Server 74 will then order the matching ads based on an algorithm driven by the priorities and weights that have been assigned to the ads. As will be described in greater detail below, the priorities and weights of these ads will be calculated to optimize the delivery plan for all of the ads and all of the users.

There are numerous factors to consider, including the maximization of revenue per delivery and minimization of cost per delivery, in scheduling deliveries for a system. Most contracts with advertisers and other content providers contain clauses that require a minimum number of deliveries to be made before any revenue is generated. There are also benefits to long term business prospects by meeting or exceeding the advertiser's desired maximum number of deliveries even if exceeding the advertiser's desired maximum may not increase the revenue generated for that contract. Current content delivery services typically pre-schedule all content deliveries for all users using conservative estimates of schedule deliveries in order to fulfill advertising contracts. Know content delivery systems can therefore be inefficient in utilizing inventory and fulfilling advertiser contracts.

In the method and system of the invention, the ads to be delivered to a subscriber are not simply compiled in a simple linear list of ads that should be displayed to a subscriber when the subscriber is available. Instead, the Scheduler component of the present invention is capable of generating a plan that is interpreted by the CDS Server 74 of the present invention to deliver ads to subscribers. These plans can be referred to as Delivery Specs, or delivery specifications. A Delivery Spec spans some time interval (typically a day, but it can vary) and has a collection of entries in it for each ad active during that time interval. In one embodiment, each ad is defined by:

1. An unique ad identifier (AD ID);
2. An integer for priority (priority);
3. An number for weight (weight);
4. An integer for the target number of impressions to deliver to this ad for the associated time period (Deliveries Requested); and
5. An integer for the expected number of impressions which will be delivered to this ad over the associated time period (Deliveries Expected).

The Deliveries Requested can be, in other words, the number of times an advertiser requests that the ad be viewed by all of the viewers combined in a given time period. The Deliveries Expected, on the other hand, can be the number of times that the ad is expected to be viewed over the given time period.

The values that dictate the delivery of the ads to a client 10 are the priority and weight pairs. These values, in conjunction with a randomly generated number described below, determine the ordering of the delivery of ads to a client 10. The ordering is as follows. Generally, all ads will be placed in the delivery queue in order of priority with ads with the highest priority getting delivered first If two or more ads have the same priority level, then a random number is used in conjunction with the weights of these ads to determine delivery. The sum of the weights for all the ads in the same priority level is then calculated. Based on this value and the random number the CDS Server 74 will select the next ad to place in the queue.

As an example to illustrate the use of priorities and weights in delivering advertisements to a given subscriber, assume a user comes on-line (via either iTV or the Internet) and the following ads in Table 1 are eligible to be delivered to the user. Each ad, which is defined by an AD ID, has a priority and a weight. Table 1 is a short list of ads, but it should be noted that such a list could contain a large number of ads.

**Table** 1

| AD_ID | Priority | Weight |
|-------|----------|--------|
| 127 | 5 | 0.3 |
| 223 | 3 | 0.7 |
| 17 | 5 | 0.2 |

If one ad has the highest priority and no other ads are tied in priority with this ad, then it would be delivered with a probability of 1. In other words, the ad with the highest priority would be delivered all of the time for this client 10. In the embodiment of Table 1, however, two ads have the highest priority of 5. Generally, it should be noted that a number of ads might have the same priority, and Table 1 simply illustrates this point with two out of three ads having the same, highest priority. Because no one ad has the highest priority, the weights are used to determine the probability of delivery of these ads. To determine the probability of delivery for each ad of priority 5, the weight for each ad is divided by the sum of all weights for all ads with priority 5. In this case, therefore, AD ID 127 has priority 5 and weight 0.3 and AD ID 17 also has priority 5 and weight 0.2. The sum of the weights for the ads with priority 5 is therefore 0.3 + 0.2 = 0.5. The probability of delivery for each ad is then calculated as being the weight of the ad divided by the sum of the weights for the ads with the same priority. For AD ID 127, therefore, the probability of delivery is 0.3/0.5 = 0.6, and for AD ID 17 the probability of delivery is 0.2/0.5 = 0.4. Because an ad that does not have the highest priority will not be delivered, the probability of delivery for such ads is zero.

Table 2 below illustrates the probability of delivery for the ads of Table 1.

**Table 2**

| AD_ID | Priority | Weight | Probability of Delivery |
|-------|----------|--------|-------------------------|
| 127   | 5        | 0.3    | 0.6                     |
| 223   | 3        | 0.7    | 0                       |
| 17    | 5        | 0.2    | 0.4                     |

The probability of delivery for an ad is the probability that the ad will be delivered to the user for each ad slot, which is a time period in which an ad can be delivered to the user. This also corresponds to the percentage of available time slots over the time period in which the ad will be displayed. In the embodiment of Table 2, therefore, the ad having AD ID 127 would be displayed 60 percent of the time to the user, the ad having AD ID 17 would be displayed 40 percent of the time to the user, and the ad having AD ID 223 would not be displayed to the user.

Each ad should generally be displayed the number of times set in the ad campaign for the Deliveries Requested. This number of displays is the total number of impressions to be delivered for the ad over all users. Eventually, as the ad campaigns for the ads having AD IDs 127 and 17 come close to completion, the method and system of the invention would lower the priorities for these ads, and AD ID 223 would eventually be delivered instead. The values of the priorities and weights for ads, therefore, is dynamically altered so that an optimal (or close to optimal) delivery plan can be achieved.

Delivery Parameter Optimizer

The Delivery Parameter Optimizer (DPO), which can reside in the On-Demand Scheduler 70, is the scheduler's mathematical engine responsible for adjusting the priorities and weights of the ads to produce an optimal delivery plan.

Determining the optimal priority/weight pair of ads so that delivery over all of the subscribers in the system is optimal can be a difficult problem. In the case where there are, for example, one million unique subscribers in the system, and one thousand ads, there would need to be one billion entries in a matrix of subscribers and advertisements (that is, a matrix such as Table 3, which is explained below). Include adjusting weights for all of these ads, and the computational resources required to generate a solution setting weights for all ads can be very large. In order to overcome these problems, the scheduler can, in one embodiment, deal with only a subset of the subscribers in the system. In such an embodiment, the subset of subscribers can be chosen randomly. The DPO of the present invention can therefore attempt to optimize the delivery plan for all of the ads by considering only this smaller subset of sampled subscribers. After the delivery plan is optimized for this subset of sampled subscribers, the results can be projected out for all of the subscribers.

The DPO attempts to find a delivery plan for the ads so that a "Delivery Ratio" for all ads having the same priority is approximately the same. The Delivery Ratio for an ad $A_i$ is defined to be:

$$DelRat(\text{Ai}) = DelEx(Ai) \div DelRq(Ai); \qquad (1)$$

where $DelEx(A_i)$ is the Deliveries Expected for ad $A_i$, $DelRat(A_l)$ is the Delivery Ratio for ad $A_i$, and $DelRq(A_i)$ is the Deliveries Requested for ad $A_i$.

As indicated earlier, each ad is defined by a set of entries, including an AD ID, a priority, a weight, a number of Deliveries Requested, and a number of Deliveries Expected. Once again, the Deliveries Requested is the number of ad impressions that an advertiser wishes to be achieved for a given ad over a time period and this number is typically set by the advertiser. The Deliveries Expected is the number of impressions that can be expected to be delivered for the ad at the current delivery schedule.

The Delivery Ratio is used to assess the performance of an individual content delivery in proportion to the master list of ads. The analysis of Delivery Ratios provides a basis for evaluating the efficiency of the delivery plan in delivering advertisements. Different delivery plans are evaluated according to the Deliveries Expected that they yield compared to the Deliveries Requested. The DPO can attempt to achieve an optimal constant value of DeliveriesExpected / DeliveriesRequested, or as close to this optimum as is possible. Generally, it can be desired that the Delivery Ratio for all ads be the same because this indicates that each of those ads is receiving about the same level of service (normalized for the Deliveries Requested). In some cases, it is possible to achieve this optimal Delivery Ratio for all ads. If this is not possible, the ads are segregated into groups of ads with different levels of priorities, each ad within the same group having approximately the same Delivery Ratio. The priorities of the groups of ads can be altered to achieve an optimal delivery plan, as is discussed in greater detail below.

It has been found that, in order to find a desirable delivery plan, the following "energy" equation can be used:

$$Energy = \sum_{t:Ads}[DelEx(Ai) \times DelRat(Ai)]; \qquad (2)$$

This "energy equation" can be used to evaluate the priorities and weights for ads to determine if the priorities and weights help to attain an optimal overall delivery plan in a manner that will be described in more detail below.

A preliminary step in the method and system of the invention is to determine the Deliveries Requested for each ad as a function of the priorities and weights for ads. The following example illustrates the determination of the Deliveries Requested as a function of the weights for the ads. First, Table 3 lists information about five different ads (Ad1, Ad2, Ad3, Ad4, Ad5). Each of these ads has a priority and a weight listed in priority and weight columns of Table 3. Table 3 also lists three different subscribers (Sub1, Sub2, Sub3) along with an indication of whether each ad is compatible for delivery to each of the subscribers. An ad is compatible for delivery to a subscriber if the profile of the subscriber matches the profile sought by the advertiser for the ad. In other words, ads are matched to the profiles of subscribers. Finally, each subscriber will have a value (V1, V2, V3) that is the inventory of ads that the user will typically view over a given time period. A subscriber, for instance, might typically view 40 advertisements per day. The value of the inventory V for each user is typically a constant,

**Table 3**

| Ad and Subscriber Information | | | | | |
|---|---|---|---|---|---|
| | | | Compatible for Delivery? | | |
| | Priority | Weight | Sub 1 (V1) | Sub 2 (V2) | Snb3 (V3) |
| Ad 1 | 1 | w1 | Yes | Yes | No |
| Ad 2 | 2 | w2 | No | Yes | No |
| Ad 3 | 2 | w3 | No | Yes | Yes |
| Ad 4 | 2 | w4 | No | Yes | No |
| Ad 5 | 2 | w5 | No | No | Yes |

Next, a matrix of the eligibility of each ad for delivery to each subscriber is determined. In order to determine if an ad is eligible for delivery to a subscriber, the priorities for ads that match the profile of subscribers are examined. An ad is eligible for delivery to a subscriber only if the priority of the ad is the highest for the subscriber or tied for the highest for the subscriber. Table 4 below shows the eligibility for delivery for each of the ads to each of the subscribers for the example of Table 3. Note that ad Ad1 is not eligible for delivery to subscriber Sub2 because ads Ad2, Ad3, and Ad4 each have a higher priority than ad Ad1 and are also compatible for delivery to subscriber Sub2.

**Table 4**

| Delivery Eligibility | | | |
|---|---|---|---|
| | Sub 1 | Sub 2 | Sub3 |
| Ad 1 | Yes | No | No |
| Ad 2 | No | Yes | No |
| Ad 3 | No | Yes | Yes |
| Ad 4 | No | Yes | No |

(continued)

| Delivery Eligibility | | | |
|---|---|---|---|
| | **Sub** 1 | **Sub 2** | **Sub3** |
| **Ad 5** | No | No | Yes |

Table 5 below is a table showing the weight for each ad that is eligible for delivery to a subscriber (using the example of Table 3). In order to calculate the probability of delivery to a subscriber for ads that have the same priority, the sum of all of the weights for the eligible ads for each subscriber is determined. Table 5, therefore, also shows the sum of the weights for eligible ads for each subscriber.

**Table 5**

| Weight values | | | |
|---|---|---|---|
| | **Sub 1** | **Sub 2** | **Sub3** |
| **Ad 1** | w1 | 0 | 0 |
| **Ad 2** | 0 | w2 | 0 |
| **Ad 3** | 0 | w3 | w3 |
| **Ad4** | 0 | w4 | 0 |
| **Ad 5** | 0 | 0 | w5 |
| **Sum of Weights** | (w1) | (w2+w3+w4) | (w3+w5) |

Table 6 below shows the Deliveries Expected for each ad as a function of the inventories and weights of the ads. In order to determine the Deliveries Expected for each ad for each subscriber, the weight for the ad is multiplied by the inventory V for the user, and then this number is divided by the sum of the weights of the eligible ads for the user. The result is an indication of the expected impressions that each of the subscribers will contribute for each ad. The Total Deliveries Expected is then the sum of the Deliveries Expected by each subscriber for each ad.

**Table 6**

| Deliveries Expected | | | | |
|---|---|---|---|---|
| | **Sub 1** | **Sub 2** | **Sub3** | **Total** |
| **Ad1 1** | (w1*V1)/(w1) | 0 | 0 | (w1*V1) / (w1) |
| **And 2** | 0 | (w2*V2)/(w2+w3+w4) | 0 | (w2*V2) / (w2+w3+w4) |
| **And 3** | 0 | (w3*V2)/(w2+w3+w4) | (w3#V3) / (w3+w5) | (w3*V2) / (w2+w3+w4) + (w3*V3) / (w3+w5) |
| **Ad 4** | 0 | (w4*V2) (w2+w4) | 0 | (w4*V2) / (w2+w4) |
| **Ad 5** | 0 | 0 | (w3*V3)/(w3+w5) | (w5*V3) / (w3+w5) |

It should be noted that, in a typical system, the number of ads and the number of subscribers is markedly larger than in the example above, where only five ads and three subscribers were used for illustrative purposes.

Each subset of ads having the same priority can be grouped together in determining the Deliveries Expected, as noted above and depicted in Table 6. The total number of Deliveries Requested for this subset of ads will be a constant as determined by the delivery specifications for the ads (that is, based on the wishes of advertisers). In addition, the total number of Deliveries Expected for this group of ads will be a constant equaling the total inventory of all of the subscribers who are eligible for delivery of one or more ads during the given time period For this reason, the Overall Delivery Ratio for this subset of ads will be constant. This Overall Delivery Ratio can be expressed as:

$$Q = \sum_{i:Ads}[DelEx(Ai)] \div \sum_{i:Ads}[DelRq(Ai)]; \qquad (3)$$

where Q is the Overall Delivery Ratio, DelEx($A_i$) is the Deliveries Expected for ad $A_i$, and DelRq($A_i$) is the Deliveries Requested for ad $A_i$. The system and method of the invention attempts to find weights that cause each ad within a given priority level to have the same delivery ratio. This is possible when each delivery ratio is equal to the Overall Delivery Ratio Q for the priority level. The system, therefore, attempts to solve equation (4) below for each ad $A_i$:

$$DelEx(Ai) = Q \times DelRq(Ai); \qquad (4)$$

where DelEx($A_i$) is the Deliveries Expected for ad $A_i$ as a function of the weights for all of the ads in the subset (as in Table 6 above), and where DelRq($A_i$) is the Deliveries Requested for ad $A_i$. The result, therefore, is a number of equations for the Deliveries Expected, with the number of equations equaling the number of ads, and with the number of unknown weights W($A_i$) also equaling the number of ads. The equations for n ads are:

$$DelEx(A1) = Q \times DelRq(A1); \qquad (5)$$

$$DelEx(A2) = Q \times DelRq(A2);$$

$$DelEx(A3) = Q \times DelRq(A3);$$

$$\cdots$$

$$DelEx(An) = Q \times DelRq(An).$$

This system of equations can also be written:

$$DelEx(W) = Q \times DelRq; \qquad (6)$$

where W is the vector of n weights for all of the ads, DelRq is the vector of n Deliveries Requested for all of the ads, and DelEx is the Deliveries Expected, an n-dimensional rational function of the vector of weights.

Solving for the Weights and Priorities

After the Deliveries Expected for each subscriber for each ad is determined, the energy function described above can be used to determine the weight for each ad. Once again, this method is performed for each subset of ads having the same priority. In addition, it should be noted that a subset of the total number of subscribers can be used, and then the results can be projected out for the other subscribers of the system.

In one embodiment, the method for finding the weights in equation (6) above involves using Newton's Method combined with an approximation of Newton's Method to solve for the weights. In this embodiment, a step from Newton's Method is ignored if it increases the energy function of equation (2). By way of background, Newton's Method is a general procedure that can be applied to solve many types of equations, When specialized to the problem of funding a zero value of a real-valued function for a real variable, it is often called the Newton-Raphson iteration. In general, Newton's Method is one method that can be used to solve such equations, although other methods could also be used. Generally, Newton's Method is faster than some other methods, such as the bisection and the secant methods, because the convergence for Newton's Method is quadric rather than linear or superlinear, as may be the case for the bisection and the secant methods.

Generally, Newton's Method can be used to find the values "x" in a function f(x) that will result in f(x) = 0. One approach to this problem is to plot a bunch of points and connect the dots until it looks like the function will hit zero. However, there are cases where this will not lead to the actual value because the function is too noisy. Newton's Method is a way of iteratively calculating the next value to test for a zero value of f(x). It relies on using the first derivative of the function, or f(x). Pseudo-code explaining Newton's Method, which is taken from "Numerical Analysis by David Kincaid," pg.86, ISBN# 0-534-33892-5, follows below as Table 7:

## Table 7

```
input x, M;
y := f(x);
output 0, x, y;
for k = 1 to M do;
        x := {x} - {y/f'(x)};
              y := f(x);
        output k, x, y;
end do.
```

A multi-dimensional Newton's Method can be used to solve equation (6). Specifically, the following pseudo-code of Table 8 can be used, where DelEx'(W) is the Jacobian of DelEx at W, and Inverse(DelEx'(W)) is the matrix inverse of the Jacobian of DelEx at W:

## Table 8

```
for k = 1 to M do;
        W := W + Inverse(DelEx'(W) (Q * DelRq – DelEx(W));
end do.
```

Newton's Method works well in many cases, although in some cases equation (6) is not solvable for the weights $W(A_i)$ and Newton's Method does not converge. As an example of a situation where Newton's Method does not converge, consider the following example. Suppose there is an available inventory of 2,000 possible impressions over a given time period and there are three ads with the following number of Deliveries Requested (DelRq): Ad1 = 600, Ad2 = 900, and Ad3 = 500. Assume the initial weight for each ad is 1. The first step of Newton's Method will result in weights that produce the following number of deliveries $(DelEx[W(A_i)])$ for each ad: Ad1 =1333, Ad2 = 333, and Ad3 = 333. Such a schedule would deliver far too many impressions for Ad1 and would deliver too few impressions for ads Ad2 and Ad3. The weight for each ad resulting from this first step would be: Ad1 = -3.2, Ad2 = 0.1, and Ad3 =1.0. It should be noted that the negative weight for ad Ad1 makes no practical sense in terms of delivering ads. The next step of Newton's Method would result in the following number of deliveries for each ad: Ad1 = 2524, Ad2 = -48, and Ad3 = -476. Such a schedule would deliver far too many impressions for ad A1 and would not only deliver too few impressions for ads Ad2 and Ad3, but it suggests a negative number of deliveries for ads Ad2 and Ad3, which is not possible. In this example, therefore, Newton's Method does not effectively solve the equation to optimize the delivery schedule.

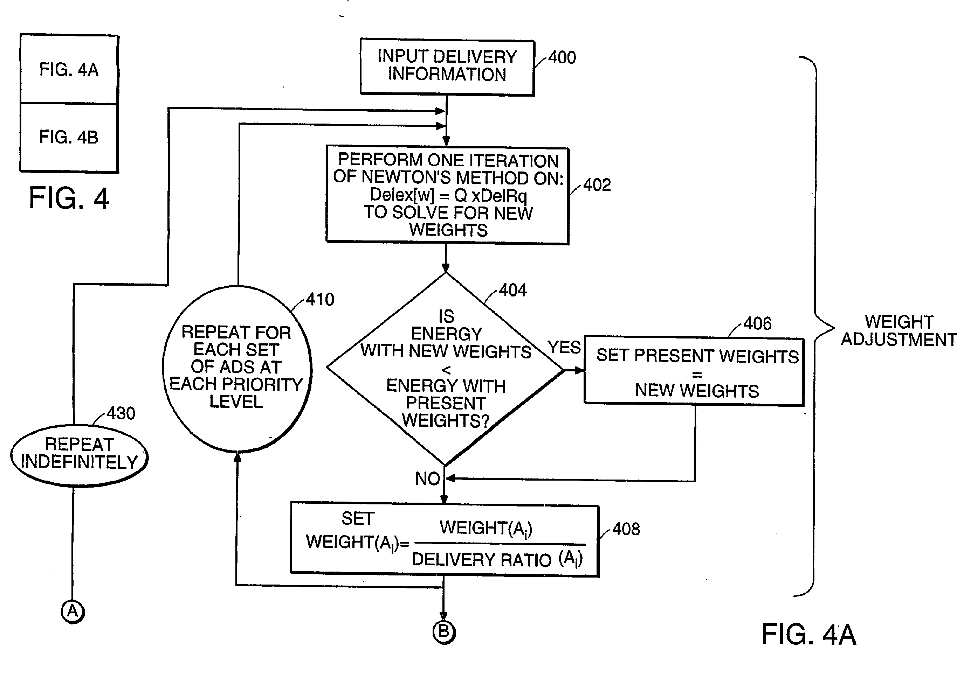

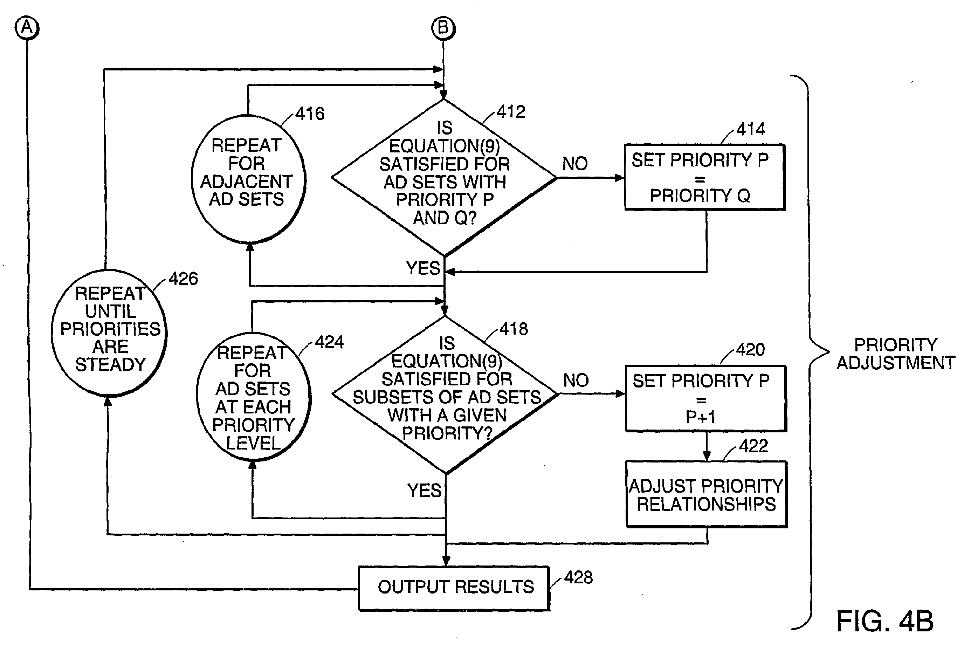

Because, in some instances, Newton's Method does not converge and equation (6) is not solvable for unique weights, a revised method can be used to solve equation (6) for the weights $W(A_i)$. After the weights $W(A_i)$ have been adjusted, the priorities for the ads can be adjusted. One embodiment of a method for adjusting weights and priorities is depicted in flow chart form in FIGURE 4 and also in pseudo-code in Table 9 below:

**Table 9**

*repeat indefinitely;*
    *input new ads, and/or updated data on subscribers;*
    *for each set of ads with priority level p;*
        *using one Newton's Method iteration, determine new weights $W(A_i)'$ for each ad at*
        *priority level p based on previous weights $W(A_i)$ and equation (6);*
        *if energy[$W(A_i)'$] < energy[$W(A_i)$], set $W(A_i) := W(A_i)'$;*
        *repeat N times;*
            *for each ad $A_i$ at priority level p;*
                *set weight[$W(A_i)$] := weight[$W(A_i)$] / DeliveryRatio($A_i$);*
    *repeat until no changes to priority are made;*
        *for each pair of adjacent priority levels p and q;*
            *reset priority p=q if equation (9) is not satisfied;*
        *if equation (9) is satisfied;*
            *increase priority of all ads in subset or with higher priority than p;*
    *output results.*

Referring to FIGURE 4, input information about ads is input at block 400. This input information can include information on the Deliveries Requested for ads, the inventory of ad slots available at each network device, and other information about the ads. Initially, each set of ads having the same priority level is grouped. For each of these sets of ads, an iteration of Newton's Method is used with equation (6) to determine anew weight $W(A_i)'$ for each ad $A_i$ at that priority level. Block 402 of FIGURE 4 depicts this act. One iteration can be performed in one embodiment, although it is also possible to perform multiple iterations of Newton's Method in this step. Next, a determination is made as to whether the energy of the system has been increased with the new weights $W(A_i)'$ determined from the iteration of Newton's Method. In other words, the energy equation is evaluated for the new set of weights for the group of ads, and block 404 depicts this determination. The energy equation of equation (2) is repeated below as equation (7):

$$Energy = \sum_{i:Ads}[DelEx(Ai) \times DelRat(Ai)]; \qquad (7)$$

In order to evaluate the energy with the weights, the energy is evaluated using the present set of weights $W(A_i)$ and compared to the energy with the new set of weights $W(A_i)'$ from the iteration of Newton's Method. The DelEx $(A_i)$ in equation (7) can be determined using the respective sets of weights $W(A_i)$, $W(A_i)'$. If the energy of the system has decreased with the new set of weights $W(A_i)'$, the weights $W(A_i)$ are reset to equal the new set of weights $W(A_i)'$. Block 406 depicts the resetting of the weights depending on whether the energy has increased or decreased.

The next part of the method for solving for the weights for the ads is to divide the weight of each ad by the delivery ratio for the ad, as depicted in block 408. In other words, the weight $W(A_i)$ for each ad $A_i$ is reset to be:

$$W(Ai) = W(Ai) \div DelRat(Ai); \qquad (8)$$

The Delivery Ratio for each ad for equation (8) can be determined by dividing Deliveries Expected for the ad by the Deliveries Requested as in equation (1). In one embodiment, the step of resetting the weights $W(A_i)$ of equation (8) can be performed an arbitrary number N of times for each iteration of Newton's Method. The number N can, in one embodiment, be 10, although in other embodiments it could be 1, 30, or any other number. Although the performance of this step of dividing the weight of each ad by the delivery ratio for the ad does not converge as quickly as using only Nowton's Method, it does work for each set of inputs, even if Newton's Method itself does not converge in a solution, as in the example above. In other words, it works well to solve for weights that decrease the output of the energy equation (7), and it therefore produces closer solutions for the weights. However, since the computation required for this step of the method is much faster than a step of Newton's Method, it is, in some embodiments, run several times for each step of Newton's Method, somewhat compensating for the slower convergence.

Block 408 of the method for solving for the weights (that is, dividing the weight of each ad by the delivery ratio for the ad) acts as a complement to Newton's Method, and it improves the performance of Newton's Method in determining

weights $W(A_i)$. This iterative method is slower than using Newton's Method in isolation, but it works for all cases, including the example above where Newton's Method fails. It has generally been found through experimentation that this method has converged in a complete solution for the weights using equation (6) in about 12 iterations or less.

Block 410 of FIGURE 4 depicts the repetition of blocks 402, 404, 406, and 408 for each set of ads having the same priority. In this manner, the weights for all of the ads at each priority level can be adjusted.

After the computation of a set of weights for each group of ads having the same priority using the steps discussed above, the priorities can be checked and, if necessary, recomputed to optimize the performance of the system.

If there exists a set of weights for all of the ads such that the Delivery Ratio is the same or approximately the same for all of the ads, then there is no need for the use of different priorities in the system, and all of the priorities can be set to the same level, such as 1. The Delivery Ratio for each set of ads is therefore determined using the weights derived from the modified Newton's Method discussed above. If the Delivery Ratios are approximately the same, then all of the priorities can be set to 1 (or some other value). In such an embodiment, the energy equation (2, 7) above is solvable for a constant Delivery Ratio. If this is the case, the Delivery Spec is defined for each subscriber, and the probability of delivery for each ad for a subscriber will be the weight for the ad divided by the summation of the weights for all of the ads matched to that subscriber.

It often happens, however, that there is a collection of ads that always have a lower Delivery Ratio than the other ads. In such a case, the Delivery Ratio is not the same or approximately the same for all of the ads. This situation arises when one or more groups of subscribers is more highly desired than other groups of subscribers. This results in a low number for the Deliveries Expected for the ad because some of the subscribers who will receive the ad are highly desired by other ads (based on the subscriber's profile). In this case, these ads having the lower Delivery Ratio can be assigned a higher priority so that they will be delivered whenever possible before ads having lower priorities over all of the subscribers. In mathematical terms, for any set of ads S, and any subset T of the ad set S, the ads in subset T should have a higher priority than the ads in the ad set S if, and only if, the following equation is true:

$$[NoSub(S) \div \mathrm{Re}\,q(S)] \leq [NoSub(T) \div \mathrm{Re}\,q(T)]; \qquad (9)$$

where NoSub(S) is the number of subscribers eligible to receive any ad in ad set S, NoSub(T) is the number of subscribers eligible to receive any ad in subset T, Req(S) is the total requested number of impressions for all ads in ad set S, and Req(T) is the total requested number of impressions for all ads in subset T.

The method and system of the invention can use equation (9) above to determine whether the priorities for ads should be adjusted in two ways. First, in block 412 of FIGURE 4, equation (9) is evaluated for each set of ads with adjacent priority levels. A set of ads with priority level 1 is, for instance, adjacent to a set of ads with priority level 2. If there exists sets of ads with priorities p and q (priority p can be for subset T and priority q can be for ad set S), such that the subset T of ads with priority p and the set of ads S with priority q do not satisfy this equation (9), then the priority of all ads with priority p is set to equal q. Block 414 depicts this act of setting the priorities for these two sets of ads equal to one another if equation (9) is not satisfied. The priorities p and q can each be set to equal either priority p or q. Generally, in practice, p and q are both set to equal the lower of these two priorities p or q, although the priorities could also be set to the higher priority. This first scenario, therefore, is the scenario where the priorities for the two ad sets are the same. Blocks 412 and 414 are repeated for each set of ads with adjacent priority levels, as indicated by block 416.

Second, equation (9) can be evaluated for subsets of ads within each set of ads having the same priority. For each set of ads with priority p, equation (9) can be evaluated on certain subsets of the set of ads with priority p, and if equation (9) is satisfied, the priority of the subset can be set to equal p+1. The subsets of ads for which equation (9) is evaluated are detailed in the following paragraph below. Block 418 depicts the determination of whether equation (9) is satisfied for the subsets, and block 420 depicts the increasing of priorities if equation (9) is satisfied. If the priority of a subset of ads within a set of ads originally having the same priority is increased in block 420, then the relation to other sets of ads at different priority levels should be altered so that the relation of priority levels is kept the same, Therefore, all priorities of ads outside of the set of ads being evaluated in blocks 418 and 420 are changed accordingly to preserve the original relationships of priorities. Block 422 depicts this adjustment of priority levels. Setting the priority of the subset of ads being evaluated equal to p+1 therefore sets off a chain reaction of priority readjustments for all of the ads outside of the group in question. To perform this readjustment, all of the ads outside of the group that had a priority of p+1 can be set to a priority of p+2 because, originally, they had a higher priority than all of the ads in the set of ads being evaluated. Similarly, all of the ads that previously had a priority of p+2 can be changed to a priority of p+3, and so on for all of the groups of ads with the same priority until all of the priorities have been adjusted so that the original relationships between the priorities outside of the set of ads being evaluated in blocks 418 and 420 are maintained

There are two collections of subsets of ads evaluated in blocks 418 and 420 above for sets of ads with the same priority level. First, for every weight w, the subset of ads A with Weight(A) > w is evaluated in block 418. The first collection evaluated at block 418 is, therefore, the subset of ads with Weight(A) > w. The subset of ads with Weight(A) > w is lncmU6d in priority if equation (9) is not satisfied. Because the subset with Weight(A) > w needs to be serviced more urgently than the ads with lower weights in the same priority level, block 420 increases the priority of this subset of ads if equation (9) is satisfied.

Second, for every Delivery Ratio d, the subset of ads A with DeliveryRatio(A) < d is evaluated. The second collection evaluated at block 418 is, therefore, the subset of ads A with DeliveryRatio(A) < d. Again, if equation (9) is satisfied for this subset of ads, the priority of this subset is increased at block 420. Because the subset with DeliveryRatio (A) < d needs to be serviced more urgently than the ads with higher Delivery Ratios in the same priority level, block 420 increases the priority of this subset of ads if equation (9) is satisfied. Block 424 depicts that the evaluation of these two collections of subsets of ads and readjustment of priorities (if necessary) is carried out for each set of ads with the same priority level. Block 426 then depicts the repetition of the priority adjustment of blocks 412, 414, 418, 420, and 422 until the priorities are steady. These priority adjustment steps essentially amount to a search for an efficient portioning of the group of ads with respect to levels of service.

After the weight and priority adjustments of one iteration of the procedure depicted in FIGURE 4 has been completed, the results are output, as depicted in block 428. The weights and priorities of the output in block 428 are then used by the Delivery Parameter Optimizer (DPO) within the On-Demand Scheduler 70 to determine the Delivery Spec for each subscriber. The ads delivered to each subscriber can be determined after priorities and weights have been set in the manner discussed above. In one embodiment, the DPO and On-Demand Scheduler 70 can constantly readjust priorities and weights in the manner discussed above, and the updated priorities and weights can be used in the Delivery Specs for each subscriber. Eventually, the ads input to the system (block 400 of FIGURE 4) will change, as will the number of Deliveries Requested for certain ads, and the priorities and weights for ads will be modified.

The embodiment of the invention discussed above and shown in FIGURE 4 can be applied to situations where Newton's Method does not converge for a solution of equation (6). The following example illustrates how the priorities and weights would be set in one simple case. In this example, suppose that three ads exist Ad Ad1 has priority 1, weight 1, and 900 Deliveries Requested. Ad Ad2 has priority 1, weight 1, and 600 Deliveries Requested. Ad Ad3 has priority 1, weight 2, and 500 Deliveries Requested. Two subscribers, Sub1 and Sub2, exist in the system, and each of these subscribers has an available inventory of 1000 ads to view. The profiles of subscribers Sub1 and Sub2 match ad Ad1, and subscriber Sub2 also has a profile that matches ad Ad2 and Ad3. Ads Ad2 and Ad3 are therefore not compatible with subscriber Sub1.

To recalculate the weights and priorities in this example, at block 402 of FIGURE 4 a first iteration of Newton's Method is performed to solve equation (6). The weights after this iteration of Newton's Method are: W1 = 0.65, W2 = 1.35, and W3 = 1.00. The Deliveries Expected for ad Ad1 = 1250, for ad Ad2 = 250, and for ad Ad3 = 500. In block 404 of FIGURE 4, the energy before the calculation of the new weights is 2340, and the energy after the iteration of Newton's Method with the new weights is 2191. The new weights are therefore accepted as the weights for the system at block 406. At block 408 of FIGURE 4, the weight for each ad is divided by the delivery ratio for the ad, and this step is repeated ten times. The following information results for the ads:

Table 10

|  | Weight | Deliveries Expected | Delivery Ratio |
|---|---|---|---|
| Ad1 | 0.137609 | 1009.08 | 1.1212 |
| Ad2 | 8.19389 | 540.503 | 0.900839 |
| Ad3 | 6.82824 | 450.419 | 0.900839 |

Because all of the ads in this example originally had the same priority, there are no subsets of ads with adjacent priorities and blocks 412, 414, and 416 of FIGURE 4 are not performed. Priorities are therefore not adjusted between adjacent priority levels. At block 418 of FIGURE 4, the sets of ads for which equation (9) should be evaluated within a set of ads having the same priority (1) are determined. These sets of ads are:

    1. Ads with priority =1 and weight > 0.137609: Ad2, Ad3.
    2. Ads with priority =1 and weight > 6.82824: none.
    3. Ads with priority = 1 and weight > 8.19389, Ad2.
    4. Ads with priority= 1 and Delivery Ratio < 1.1212: Ad2, Ad3.
    5. Ads with priority = 1 and Delivery Ratio < 0.900839: none.

Equation (9) is therefore evaluated for two subsets of ads: (1) the subset of ad Ad2; and (2) the subset of ad Ad2 and Ad3, The evaluation of equation (9) for ad Ad2 becomes:

$$1000 / 600 <= (1000 + 1000) / (900 + 600 + 500) \text{ or } 1.6667 <= 1.0;$$

which is not satisfied Because equation (9) is not satisfied for the subset of ad Ad2, the priorities are not modified based on that subsets. The evaluation of equation (9) for the second subset of ads, Ad2 and Ad3, becomes:

$$1000 / (600 + 900) <= (1000 + 1000) / (900 + 600 + 500) \text{ or } 0.6667 <= 1.0;$$

which is satisfied. Because Equation (9) is satisfied for this subset of ads, the priority of each of these ads is increased to 2. At this point, the weights and priorities for the ads are output as in the following Table 11, and the steps of FIGURE 4 can then be repeated:

**Table 11.**

|  | Priority | Weight |
|---|---|---|
| **Ad1** | 1 | 0.137609 |
| **Ad2** | 2 | 8.19389 |
| **Ad3** | 2 | 6.82824 |

Capacity Forecaster

The Capacity Forecaster component 52 assists in predicting the success of a campaign proposed by an advertiser. For example, it predicts whether the system will be able to deliver a proposed number of impressions to users of some given profile within a desired period of time. When a new contract with an advertiser is under consideration (i.e., the advertiser proposes a new campaign), the Capacity Forecaster 52 calculates the probable or expected supply (i.e., surplus) of screen real estate on user client devices and approves the contract if an adequate supply is expected for the proposed campaign. If the supply is not sufficiently large, the Capacity Forecaster 52 assists the advertiser in modifying the campaign requirements or constraints set by the Ad buyer by determining which constraints could be modified and how in order to successfully schedule a potential contract.

The Capacity Forecaster 52 determines campaign achievability by examining the number of qualified subscribers who match the campaign's profile using the Matcher and then creating a new valid schedule with the new ad in it. If a sufficient number of available subscribers is not available, the Capacity Forecaster 52 identifies and suggests constraints to relax so that the campaign goals can be met such as, e.g., increasing the campaign length, reducing the number of requested impressions, or relaxing the profile constraints.

Additionally, the Capacity Forecaster 52 can periodically re-evalnate campaigns currently under execution, and determine their probability of success, e.g., whether the system will be able to schedule the contracted number of content deliveries based on delivery data feedback that has been received. Again, the Forecaster 52 can determine whether constraints set by the advertiser should be relaxed in order to increase the likelihood of success of the campaign.

Inventory Manager

The Inventory Manager 51 generates a master delivery plan expected to fulfill delivery contracts with advertisers. It uses delivery feedback information received from the On-Demand Scheduler 70 of each ITV server 16 in the system to adaptively modify the master plan on a periodic basis.

For each accepted advertising campaign, the Inventory Manager 51 calculates a daily goal number of impressions to meet contract requirements. Advertisers typically desire to distribute the total number of desired impressions equally over each day of the campaign. (Alternatively, other distribution patterns can be used as desired.) The goals are periodically updated, e,g., each day, by comparing the number actually delivered to the desired total number of impressions.

The Inventory Manager constructs the master delivery plan on a periodic basis, e.g., once a day, based on the calculated goals of each of the active advertising campaigns. The plan specifies a prioritized master list of advertisements, which is sent to the On-Demand Scheduler 70 at each iTV server 16. The order is based preferably both upon priority and some weighting mechanism that indicates how many impressions are needed by each campaign.

The Delivery Manager 54 can reorder or reprioritize the master list of scheduled advertisements based upon delivery feedback data and queuing logic/algorithms. For example, if the goal for a given campaign is to evenly distribute an advertisement over the course of the campaign length, the advertisement can be moved down in the queue of advertisements to be displayed if it gets ahead of its daily goals. Similarly, if an advertisement gets behind in meeting its goals, it may be automatically promoted in priority. If an advertisement exceeds its daily goal it can be effectively shut off by being placed at the very end of the queue.

Delivery Qualities

In accordance with a further embodiment of the invention, the scheduler system ensures that subscribers always have content to display even if they are not eligible for any active campaigns. Accordingly, the system preferably provides a set of default or filler impressions to be displayed when there is no content available for a given user.

In accordance with a further embodiment of the invention, the scheduler system is capable of delivering 'instant' advertisements (or other content) to subscribers. These are advertisements that are delivered to users if they perform some given action. The system can preferably preempt the normal queue of ordered advertisements in an individual schedule with an instant advertisement when needed. The system preferably allows the percentage of time that instant advertisements can preempt the normal queue to be configurable in order to reduce errors in calculations made by the Capacity Forecaster.

The system improves use of excess inventory. It can also increase the likelihood of over-delivery (i.e., delivering a greater number of impressions than requested by an advertiser), which is typically favorable to advertisers. It provides a generally even distribution of impressions over the length of the campaign (if so desired). The system provides greater diversification of impressions (i.e., the advertisements are distributed to different users in a target group).

**Claims**

1. A method of scheduling delivery of items of content to a plurality of network devices (10),
   the method comprising:

   determining a profile for each user of an associated one of the plurality of network devices (10), the profile being based on an observed use of the associated one of the plurality of network devices; and
   generating (110) a unique individual list of one or more items of content to be delivered to each of the plurality of network devices, the unique individual list being based on the profile of the user of the associated one of the plurality of network devices and specifications, the specifications including delivery parameters for each of the items of content (A);

   and **characterised by**:

   determining (402- 408, 412 - 422) a priority and a weight for each of the items of content, the priority being a value relating to an order of delivery and the weight being a factor in determining a probability of delivery for each item of content in relation to the other items of content at each network device; and
   optimizing a delivery schedule for the items of content based on the determined priority and weight for each of the items of content.

2. The method of claim 1, wherein the network devices (10) are iTV set-top boxes or computers with Internet access (14, 15).

3. The method of claim 1, wherein, for a given network device (10), the item of content (A) having the priority with a higher value is delivered before other items of content.

4. The method of claim 1, wherein two of more items of content (AD ID 17, AD ID 127) with the same priority value are each delivered a certain percentage of available delivery slots, the certain percentage being defined by the weight for each item of content (A).

5. The method of claim 4, wherein the certain percentage being defined by the weight (w) of each item of content (A) is equal to the weight of that item of content divided by the summation of the weights of all items of content for the given network device (10).

6. The method of claim 1, further comprising using a number of deliveries requested (DelRq) for each item of content (A) to the associated one of the plurality of network devices (10) to optimize the delivery schedule.

7. The method of claim 6, further comprising using a number of deliveries expected (DelEx) for each item of content (A) to the associated one of the plurality of network devices (10) to optimize the delivery schedule.

8. The method of claim 7, further comprising using a number of times available that each item of content (A) can be delivered to the associated one of the plurality of network devices (10) for each item of content to optimize the delivery schedule.

9. The method of claim 8, wherein the number of deliveries expected (DelEx) for each item of content (A) is expressed as a function of the weights for the items of content and the number of times available that each item of content can be delivered to the associated one of the plurality of network devices (10).

10. The method of claim 9, wherein the function (Eq 5) for the deliveries expected for each of the items of content is:

$$DelEx(A_i) = Q \times DelRq(A_i);$$

where DelEx $(A_i)$ is the deliveries expected for item of content $A_i$ as a function of the weights for the items of content, DelRq $(A_i)$ is a constant equaling the deliveries requested for item of content $A_i$, and where,

$$Q = \sum_i [DelEx(A_i)] \div \sum_i [DelRq(A_i)]$$ where i is the number of items of content.

11. The method of claim 10, wherein Q is a constant for the items of content $(A_i)$ evaluated.

12. The method of claim 11, wherein determining (402, 404, 406, 408) the weight for each item of content $(A_i)$ includes using Newton's Method (402) to iteratively solve the function for the deliveries expected for the weight, wherein new weights $(W(A_i)')$ from an iteration of Newton's Method are accepted (404) as the weights if an energy function decreases with the new weights, the energy function being used to evaluate values of the priorities and the weights for the items of content to attain the optimized delivery schedule.

13. The method of claim 12, wherein the energy function (Eq 2) is:

$$Energy = \sum_i [DelEx(A_i) \times DelRat(A_i)];$$ where DelRat(Ai) is the delivery ratio for item of content $A_i$ and is equal to DelEx $(A_i)$/DclRq$(A_i)$.

14. The method of claim 13, wherein determining (412-422) the priority for each of the items of content $(A_i)$ includes:

evaluating (418) subsets of each group of items of content with the same priority; and
resetting (420) the priority for a particular subset of the group of items of content to a higher priority if the particular subset will be underdelivered at the same priority.

15. The method of claim 1,
wherein the items of content $(A_i)$ comprise advertisements to be displayed on a display device operated by each network device (10); or
wherein the specifications specify the number of times an item of content is to be delivered to the network devices; or
wherein the specifications specify a time period during which a given number of deliveries of an item of content is to be delivered to the network devices.

16. A computer system to schedule delivery of items of content to a plurality of network devices (10), the system comprising: a program

a memory for storing the program; and
a processor operative with the program to:

determine a profile for at least a portion of each user (10) of an associated one of the plurality of network devices, the profile being based on an observed use of the associated one of the plurality of network devices; and
generate (110) a unique individual list of one or more items of content to be delivered to each of the plurality of network devices, the unique individual list being based on the profile of the user of the associated one of the plurality of network devices and specifications, the specifications including delivery parameters for each of the items of content;

and **characterised by** the processor further being operative with the program to:

determine (402-408, 412-422) a priority and a weight for each of the items of content, the priority being a value relating to an order of delivery and the weight being a factor in determining a probability of delivery for each item of content in relation to the other items of content at each network device; and
optimizing a delivery schedule for the items of content based on the determined priority and weight for each of the items of content.

**Patentansprüche**

1. Verfahren zur Planung der Lieferung von Inhalten an eine Vielzahl von Netzwerkgeräten (10), das folgendes umfasst:

Bestimmung eines Profils für jeden Benutzer eines mit ihm verbundenen der Vielzahl von Netzwerkgeräten (10), wobei das Profil auf der beobachteten Verwendung des mit ihm verbundenen der Vielzahl von Netzwerkgeräten basiert; und
Erzeugung (110) einer unverwechselbaren individuellen Liste eines oder mehrerer Inhalte, die an jede der Vielzahl von Netzwerkgeräten geliefert werden sollen, wobei die unverwechselbare individuelle Liste auf dem Profils des Benutzers des mit ihm verbundenen der Vielzahl von Netzwerkgeräten und Spezifikationen basiert, wobei die Spezifikationen Lieferungsparameter für jeden der Inhalte (A) einschließen;
und **gekennzeichnet durch**:

Bestimmung (402 408, 412 422) eines Vorrangs und eines Gewichts für jeden der Inhalte, wobei der Vorrang ein Wert mit Bezug auf einen Lieferauftrag ist und das Gewicht ein Faktor bei der Bestimmung einer Lieferungs-Wahrscheinlichkeit für jeden Inhalt in Bezug auf die anderen Inhalte bei jedem Netzwerkgerät; und
Optimierung eines Lieferungsterminplans für die Inhalte auf der Grundlage des bestimmten Vorrangs und Gewichts für jeden der Inhalte.

2. Verfahren nach Anspruch 1, wobei die Netzwerkgeräte (10) iTV-Set-Top-Boxen sind oder Computer mit Internetzugang (14, 15).

3. Verfahren nach Anspruch 1, wobei für ein gegebenes Netzwerkgerät (10) der Inhalt (A) mit dem Vorrang mit einem höheren Wert vor anderen Inhalten geliefert wird.

4. Verfahren nach Anspruch 1, wobei zwei von mehreren Inhalten (AD ID 17, AD ID 127) mit demselben Vorrangwert je einen gewissen Anteil von verfügbaren Lieferungszeitfenstern geliefert werden, wobei der gewisse Anteil durch das Gewicht für jeden Inhalt (A) definiert ist.

5. Verfahren nach Anspruch 4, wobei der durch das Gewicht (w) jedes Inhalts (A) definierte gewisse Anteil gleich dem Gewicht des Inhalts geteilt durch die Summe der Gewichte aller Inhalten für das gegebene Netzwerkgerät (10) ist.

6. Verfahren nach Anspruch 1, des weiteren umfassend die Verwendung einer Zahl von angeforderten Lieferungen (DelRq) für jeden Inhalt (A) zu dem damit verbundenen aus der Vielzahl von Netzwerkgeräten (10), um den Lieferungsterminplan zu optimieren.

7. Verfahren nach Anspruch 6, des weiteren umfassend die Verwendung einer Zahl der erwarteten Lieferungen (DelEx) für jeden Inhalt (A) zu dem damit verbundenen aus der Vielzahl von Netzwerkgeräten (10), um den Lieferungsterminplan zu optimieren.

8. Verfahren nach Anspruch 7, des weiteren umfassend die Verwendung einer Zahl, die aussagt, wie oft jeder Inhalt (A) zu dem damit verbundenen aus der Vielzahl von Netzwerkgeräten (10) für jeden Inhalt geliefert werden kann, um den Lieferungsterminplan zu optimieren.

9. Verfahren nach Anspruch 8, wobei die Zahl der erwarteten Lieferungen (DelEx) für jeden Inhalt (A) als eine Funktion der Gewichte für die Inhalte und die Zahl ausgedrückt ist, die aussagt, wie oft jeder Inhalt zu dem damit verbundenen aus der Vielzahl von Netzwerkgeräten (10) geliefert werden kann.

10. Verfahren nach Anspruch 9, wobei die Funktion (Gleichung 5) für die erwarteten Lieferungen für jeden der Inhalte lautet:

$$DelEx(A_i)= Q \times DelRq(A_i);$$

wobei DelEx $(A_i)$ die erwarteten Lieferungen für Inhalt $A_i$ als eine Funktion der Gewichte für die Inhalte ist, DelRq $(A_i)$ eine Konstante und gleich den Lieferungen, die für Inhalt $A_i$ angefordert werden, und wobei

$$Q= \sum_i [DelEx(Ai)] \div \sum_i [DelRq(Ai)],$$ , wobei i die Zahl der Inhalte ist.

11. Verfahren nach Anspruch 10, wobei Q eine Konstante für die ausgewerteten Inhalte $(A_i)$ ist.

12. Verfahren nach Anspruch 11, wobei die Bestimmung (402, 404, 406, 408) des Gewichts für jeden Inhalt $(A_i)$ die Verwendung des Newton-Verfahrens (402) umfasst, um iterativ die Funktion für die erwarteten Lieferungen für das Gewicht zu lösen, wobei neue Gewichte $(W(A_i)')$ aus einer Iteration des Newton-Verfahrens (404) als Gewichte angenommen werden, wenn eine Energiefunktion sich mit den neuen Gewichten verringert, wobei die Energiefunktion benutzt wird, um Werte der Prioritäten auszuwerten und die Gewichte für die Inhalte, um den optimierten Lieferungsterminplan zu erreichen.

13. Verfahren nach Anspruch 12, wobei die Energiefunktion (Gleichung 2) ist:

$$Energie = \sum_i DelEx (A_i) \times DelRat(A_i))];$$ wobei DelRat($A_i$ die Lieferquote für den Inhalt $A_i$ ist und gleich DelEx $(A_i)$/DelRq($A_i$) ist.

14. Verfahren nach Anspruch 13, wobei die Bestimmung (412-422) des Vorrangs für jeden der Inhalte $(A_i)$ folgendes umfasst:

Bewerten (418) von Teilmengen jeder Gruppe von Inhalten mit demselben Vorrang; und
Einstellen (420) des Vorrangs für eine besondere Teilmenge der Gruppe von Inhalten auf einen höheren Vorrang, falls diese besondere Teilmenge bei demselbem Vorrang unterbeliefert sein wird.

15. Verfahren nach Anspruch 1,
wobei die Inhalte $(A_i)$ Anzeigen auf einem Sichtgerät umfassen, das von jedem Netzwerkgerät (10) betrieben wird; oder
wobei die Spezifikationen präzisieren, wie oft ein Inhalt an die Netzwerkgeräte geliefert werden soll; oder
wobei die Spezifikationen einen Zeitraum präzisieren, in dem eine gegebene Zahl von Lieferungen eines Inhalts an die Netzwerkgeräte geliefert werden soll.

16. Computersystem zur Planung der Lieferung von Inhalten an eine Vielzahl von Netzwerkgeräten (10), wobei das System folgendes umfasst: ein Programm
einen Speicher zum Speichern des Programms; und
einen Prozessor, der mit dem Programm arbeitet, um:

Bestimmung eines Profils für mindestens einen Teil jedes Benutzers (10) eines mit ihm verbundenen der Vielzahl von Netzwerkgeräten, wobei das Profil auf einer beobachteten Verwendung des mit ihm verbundenen der Vielzahl von Netzwerkgeräten basiert; und Erzeugung (110) einer unverwechselbaren individuellen Liste eines oder mehrerer Inhalte, die an jede der Vielzahl von Netzwerkgeräten geliefert werden sollen, wobei die unverwechselbare individuelle Liste auf dem Profils des Benutzers des mit ihm verbundenen der Vielzahl von Netzwerkgeräten und Spezifikationen basiert, wobei die Spezifikationen Lieferungsparameter für jeden der Inhalte einschließen;

und **gekennzeichnet dadurch, dass** der Prozessor des weiteren mit dem Programm arbeitet, um: einen Vorrang und ein Gewicht für jeden der Inhalte zu bestimmen (402-408, 412-422), wobei der Vorrang ein Wert mit Bezug auf einen Lieferauftrag ist und das Gewicht ein Faktor bei der Bestimmung einer Lieferungs-Wahrscheinlichkeit für jeden Inhalt in Bezug auf die anderen Inhalte bei jedem Netzwerkgerät ist; und

Optimierung eines Lieferungsterminplans für die Inhalte auf der Grundlage des bestimmten Vorrangs und Gewichts für jeden der Inhalte.

## Revendications

**1.** Procédé pour programmer la distribution d'articles de contenu à une pluralité de dispositifs de réseau (10), le procédé comprenant :

la détermination d'un profil pour chaque utilisateur d'un dispositif associé de la pluralité des dispositifs de réseau (10), le profil étant basé sur une utilisation observée du dispositif associé de la pluralité des dispositifs de réseau; et

la génération (110) d'une liste individuelle unique d'un ou plusieurs articles de contenu à distribuer à chacun de la pluralité des dispositifs de réseau, la liste individuelle unique étant basée sur le profil de l'utilisateur du dispositif associé de la pluralité des dispositifs de réseau et des spécifications, les spécifications comprenant des paramètres de distribution pour chacun des articles de contenu (A);

et **caractérisé par** :

la détermination (402 - 408, 412 - 422) d'une priorité et d'un poids pour chacun des articles de contenu, la priorité étant une valeur concernant un ordre de distribution et le poids étant un facteur dans la détermination d'une probabilité de distribution pour chaque article du contenu par rapport aux autres articles de contenu auprès de chaque dispositif de réseau; et

l'optimisation d'un programme de distribution pour les articles de contenu, basé sur la priorité et le poids déterminés pour chacun des articles de contenu.

**2.** Le procédé de la revendication 1, où les dispositifs de réseau (10) sont des décodeurs numériques iTV ou des ordinateurs avec accès à Internet (14, 15).

**3.** Le procédé de la revendication 1, où, pour un dispositif de réseau donné (10), l'article de contenu (A) ayant la priorité avec une valeur supérieure est distribué avant d'autres articles de contenu.

**4.** Le procédé de la revendication 1, où deux de plusieurs articles de contenu (AD ID 17, AD ID 127) avec la même valeur de priorité sont distribués selon un certain pourcentage de créneaux horaires de distribution disponibles, le pourcentage étant défini par le poids pour chaque article du contenu (A).

**5.** Le procédé de la revendication 4, où le certain pourcentage étant défini par le poids (w) de chaque article du contenu (A) est égal au poids de cet article de contenu divisé par la somme des poids de tous les articles de contenu pour le dispositif de réseau donné (10).

**6.** Le procédé de la revendication 1, comprenant en plus l'usage d'un nombre de distributions demandées (DelRq) pour chaque article de contenu (A) au dispositif associé de la pluralité des dispositifs de réseau (10), pour optimiser le programme de distribution.

**7.** Le procédé de la revendication 6, comprenant en plus l'usage d'un nombre de distributions attendu (DelEx) pour chaque article de contenu (A) au dispositif associé de la pluralité des dispositifs de réseau (10) pour optimiser le programme de distribution.

8. Le procédé de la revendication 7, comprenant en plus l'usage d'un nombre de fois disponibles que chaque article de contenu (A) peut être distribué au dispositif associé de la pluralité des dispositifs de réseau (10) pour chaque article de contenu pour optimiser le programme de distribution.

9. Le procédé de la revendication 8, où le numéro de distributions attendu (DelEx) pour chaque article de contenu (A) est exprimé comme fonction des poids pour les articles de contenu et le nombre de fois que chaque article de contenu peut être distribué au dispositif associé de la pluralité des dispositifs de réseau (10).

10. Le procédé de la revendication 9, où la fonction (Eq 5) pour les distributions attendues pour chacun des articles de contenu est :

$$\mathrm{DelEx}(A_i) = Q \mathrm{x} \mathrm{DelRq}(A_i);$$

où DelEx $(A_i)$ sont les distributions attendues pour l'article de contenu $A_i$ comme fonction des poids pour les articles de contenu, DelRq $(A_i)$ est une constante qui équivaut les distributions demandées pour l'article de contenu $A_i$, et

où $Q = \sum_i [\mathrm{DelEx}(Ai)] \div \sum_i [\mathrm{DelRq}(Ai)]$, où i est le numéro d'articles de contenu.

11. Le procédé de la revendication 10, où Q est une constante pour les articles de contenu $(A_i)$ évalués.

12. Le procédé de la revendication 11, où la détermination (402, 404, 406, 408) du poids pour chaque article de contenu $(A_i)$ inclut l'usage de la méthode de Newton (402) pour résoudre itérativement la fonction pour les distributions attendues pour le poids, où de nouveaux poids $(W(A_i)')$ d'une itération de la méthode de Newton sont acceptés (404) comme poids si une fonction d'énergie diminue avec les nouveaux poids, la fonction d'énergie étant utilisée pour évaluer des valeurs des priorités et les poids pour les articles de contenu pour atteindre le programme de distribution optimisée.

13. Le procédé de la revendication 12, où la fonction d'énergie (Eq 2) est :

$$\mathrm{\acute{E}nergie} = \sum_i \mathrm{DelEx}(A_i) \mathrm{\ x\ } \mathrm{DelRat}(A_i))], \quad ; \text{où DelRat}(A_i) \text{ est le rapport de distribution pour l'article}$$

de contenu $A_i$ et est égal à DelEx $(A_i)$/DelRq$(A_i)$

14. Le procédé de la revendication 13, où la détermination (412-422) de la priorité pour chacun des articles de contenu (Ai) inclut :

l'évaluation (418) des sous-ensembles de chaque groupe d'articles de contenu avec la même priorité; et
la correction (420) de la priorité pour un sous-ensemble particulier du groupe d'articles de contenu à une priorité supérieure si le sous-ensemble particulier sera sous-distribué à la même priorité.

15. Le procédé de la revendication 1,
où les articles de contenu (Ai) comprennent des annonces/publicités à afficher sur un dispositif d'affichage mis en fonction par chaque dispositif de réseau (10); ou bien où les spécifications spécifient le nombre de fois qu'un article de contenu doit être distribué aux dispositifs de réseau; ou bien
où les spécifications spécifient une période de temps pendant laquelle un nombre donné de distributions d'un article de contenu doit être distribué aux dispositifs de réseau.

16. Un système d'ordinateurs pour programmer la distribution d'articles de contenu à une pluralité de dispositifs de réseau (10), le système comprenant : un programme une mémoire pour le stockage du programme; et
un processeur qui fonctionne avec le programme pour :

déterminer un profil pour au moins une partie de chaque utilisateur (10) d'un dispositif associé de la pluralité des dispositifs de réseau, le profil étant basé sur une utilisation observée du dispositif associé de la pluralité des dispositifs de réseau; et

produire (110) une liste individuelle unique d'un ou plusieurs articles de contenu à distribuer à chacun de la pluralité des dispositifs de réseau, la liste individuelle unique étant basée sur le profil de l'utilisateur du dispositif associé de la pluralité des dispositifs de réseau et des spécifications, les spécifications comprenant des paramètres de distribution pour chacun des articles du contenu ;

et **caractérisé par** le processeur étant en outre opérationnel avec le programme pour : déterminer (402-408, 412-422) une priorité et un poids pour chacun des articles de contenu, la priorité étant une valeur concernant un ordre de distribution et le poids étant un facteur dans la détermination d'une probabilité de la distribution pour chaque article de contenu par rapport aux autres articles de contenu auprès de chaque dispositif de réseau ; et

optimiser un programme de distribution pour les articles de contenu, basé sur la priorité et le poids déterminés pour chacun des articles de contenu.

FIG. 1

FIG. 2

RECEIVE PROPOSED
NEW AD CAMPAIGN
100

IS
CAMPAIGN
ACHIEVABLE?
102

NO → RELAX
CONSTRAINTS
104

YES

APPROVE
CAMPAIGN
106

CONSTRUCT MASTER
DELIVERY PLAN FOR
ALL APPROVED
CAMPAIGNS 108

FOR EACH
SUBSCRIBER, ON
USER LOGIN,
CONSTRUCT
INDIVIDUAL
SCHEDULE 110

TRANSMIT ADS
TO USERS
112

REPORT AD
DELIVERY TO
DELIVERY MANAGER
114

FIG. 3

EP 1 433 104 B1

| FIG. 4A |
|---|
| FIG. 4B |

**FIG. 4**

INPUT DELIVERY INFORMATION ⌐400

PERFORM ONE ITERATION OF NEWTON'S METHOD ON: Delex[w] = Q xDelRq TO SOLVE FOR NEW WEIGHTS ⌐402

REPEAT FOR EACH SET OF ADS AT EACH PRIORITY LEVEL ⌐410

IS ENERGY WITH NEW WEIGHTS < ENERGY WITH PRESENT WEIGHTS? ⌐404

YES

SET PRESENT WEIGHTS = NEW WEIGHTS ⌐406

NO

REPEAT INDEFINITELY ⌐430

SET WEIGHT($A_i$)= $\dfrac{\text{WEIGHT}(A_i)}{\text{DELIVERY RATIO }(A_i)}$ ⌐408

WEIGHT ADJUSTMENT

Ⓐ

Ⓑ

**FIG. 4A**

EP 1 433 104 B1

Ⓐ          Ⓑ

REPEAT
FOR
ADJACENT
AD SETS ⟋416

⟋412
IS
EQUATION(9)
SATISFIED FOR
AD SETS WITH
PRIORITY P
AND Q?

NO →

⟋414
SET PRIORITY P
=
PRIORITY Q

YES

REPEAT
UNTIL
PRIORITIES
ARE
STEADY ⟋426

REPEAT
FOR
AD SETS
AT EACH
PRIORITY
LEVEL ⟋424

⟋418
IS
EQUATION(9)
SATISFIED FOR
SUBSETS OF AD SETS
WITH A GIVEN
PRIORITY?

NO →

⟋420
SET PRIORITY P
=
P+1

⟋422
ADJUST PRIORITY
RELATIONSHIPS

YES

OUTPUT RESULTS ⟋428

PRIORITY
ADJUSTMENT

FIG. 4B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6144944 A
- US 5724521 A
- US 6026368 A
- US 7174305 B
- US 20020059094 A

**Non-patent literature cited in the description**

- *Numerical Analysis by David Kincaid,* ISBN # 0-534-33892-5, 86